(19) Europäisches Patentamt
European Patent Office
Office européen des brevets

(11) Veröffentlichungsnummer: **0 277 331 B1**

(12) # EUROPÄISCHE PATENTSCHRIFT

(45) Veröffentlichungstag der Patentschrift: **09.09.92**

(21) Anmeldenummer: **87118800.9**

(22) Anmeldetag: **18.12.87**

(51) Int. Cl.5: **C08L 75/04**, C08L 95/00, C08L 61/20, C08K 5/01, C09D 175/04, C09D 195/00, C09J 175/04, C09K 3/10, C08J 9/00, //(C08L75/04,95:00, 61:20),(C08L95/00,75:04,61:20)

(54) **Flüssige, lösungsmittelfreie oder lösungsmittelarme, härtbare Polyurethan-Bitumen-Weichmacher-Einkomponenten-Zusammensetzung, Verfahren zu deren Herstellung und deren Verwendung.**

(30) Priorität: **03.01.87 DE 3700100**

(43) Veröffentlichungstag der Anmeldung:
**10.08.88 Patentblatt 88/32**

(45) Bekanntmachung des Hinweises auf die Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
**FR-A- 1 207 008**

(73) Patentinhaber: **LUCKE, Heinz**
**Heidelberger Strasse 58**
**W-6915 Dossenheim(DE)**

(72) Erfinder: **LUCKE, Heinz**
**Heidelberger Strasse 58**
**W-6915 Dossenheim(DE)**

(74) Vertreter: **Naumann, Ulrich**
**Ullrich & Naumann, Patentanwälte, Gaisbergstrasse 3**
**W-6900 Heidelberg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine flüssige, lösungsmittelfreie oder lösungsmittelarme, härtbare Polyurethan-Bitumen-Weichmacher-Einkomponenten-Zusammensetzung, ein Verfahren zu deren Herstellung sowie deren Verwendung.

Bei Bitumen handelt es sich um außerordentlich komplexe Gemische, die überwiegend aus polycyclischen Kohlenwasserstoffen und Sauerstoff-Verbindungen bestehen. Dabei ist deutlich zu unterscheiden zwischen den Begriffen Bitumen und Asphalt und den Begriffen Teer und Pech (vergl. DIN 55 946). Nach der einschlägigen Literatur (z.B. "Bitumen" von K.H. Güsfeldt, Deutsche Shell AG in Ullmanns Enzyklopädie der Technischen Chemie, 4 Aufl., Weinheim 1974, Bd. 8, S. 527-541) sind Bitumen, die bei der schonenden Aufarbeitung von Erdölen gewonnenen dunkelfarbigen, halbfesten bis springharten, schmelzbaren, hochmolekularen Kohlenwasserstoffgemische und die in Schwefelkohlenstoff ($CS_2$) löslichen Anteile der Naturasphalte. Man unterscheidet verschiedene Bitumenqualitäten, wie Destillat-Bitumen, geblasene Bitumen, Hochvakuum-Bitumen und Verschnitt-Bitumen.

Im Rahmen der vorliegenden Erfindung soll der Begriff Bitumen auch Asphalte umfassen, bei denen es sich um Gemische von Bitumen und Mineralstoffen handelt. Solche Asphalte sind z.B. Asphalt-Beton, Guß-Asphalt, Asphalt-Mastix und Naturasphalte, bei denen es sich um natürlich vorkommende Gemische von Bitumen und Mineralstoffen handelt.

Wie oben bereits erwähnt, fallen Teere und Peche nicht unter die Erfindung. Teere sind durch zersetzende thermische Behandlung (< 700 ° C:Tieftemperatur-Teere; 900 bis 1300 ° C : Hochtemperatur-Teere) organischer Naturstoffe gewonnene flüssige bis halbfeste Erzeugnisse, die man je nach Herkunft des Naturstoffes entsprechend bezeichnet, z.B. Steinkohlenteere, Braunkohlenteere, Holzteere, Torfteere und Ölschieferteere. Teere sind im allgemeinen dunkle bis schwarze viskose Flüssigkeiten mit geringen Anteilen an emulgiertem Wasser und dispergierten, bei der Entstehung mitgerissenen kohlenstoffreichen Feststoffpartikeln (sog. "Teer-Sedimente").

Peche sind demgegenüber die Rückstände von der Destillation der Teere. Auch hier unterscheidet man je nach Herkunft zwischen Kohlenteer-Pechen, Petroleum-Pechen, Tallöl-Pechen, Fischöl-Pechen usw.. Peche sind im allgemeinen dunkle bis schwarze, thermoplastische Stoffe mit einem breiten Molekulargewichtsspektrum (also sog. Vielstoffgemische höher molekularer Komponenten).

Eine weitere Möglichkeit der Unterscheidung zwischen Bitumen/Asphalten und Teeren/Pechen bietet die Toxikologie dieser Stoffe. Bitumen bzw. Asphalt enthält im Gegensatz zu Steinkohlenteer keine cancerogenen polycyclischen Kohlenwasserstoffe. Teere und Peche werden definitionsgemäß durch zersetzende thermische Behandlung bei Temperaturen oberhalb 500 ° C hergestellt (s.o.). Bei Temperaturen über 500 ° C bilden sich bei der Pyrolyse von organischen Materialien stets cancerogene polycyclische aromatische Kohlenwasserstoffe. Man hat in Teeren und Pechen schon mindestens 20 solcher unterschiedlich stark carcinogenen Stoffe nachgewiesen. So finden sich die stärksten Carcinogene unter den polycyclischen aromatischen Kohlenwasserstoffen bei Verbindungen mit 5 und mehr Benzolringen, z.B. Benzpyren. Bei Hochtemperaturteeren (> 1000 ° C) bildet sich u.a. auch noch 7,12-Dimethyl-benzanthracen, das sich im Tierexperiment als stark carcinogen erwiesen hat. Auch 2-Naphthylamin, eine bekanntermaßen carcinogene Substanz, findet sich in Teeren und Pechen (vergl. z.B. "Teer und Pech" G. Collin/M. Zander, Rütgerswerke AG in Ullmanns Enzyklopädie der Technischen Chemie, 4. Aufl., Weinheim, 1982, Bd. 22, S. 411-455).

Während Teere und Peche als ausgesprochen cancerogen wirkende Stoffe angesehen werden müssen, sind Bitumen und Asphalte als nicht cancerogen einzustufen. In diesem Zusammenhang ist darauf hinzuweisen, daß in der Literatur die oben erläuterte scharfe Abgrenzung der Begriffe Bitumen/Asphalt und Teere/Peche häufig nicht konsequent durchgehalten wird. So ist beispielsweise manchmal von bituminösen Materialien die Rede, ohne daß dieser Begriff eindeutig definiert ist, da mit ihm auch häufig Teere und Peche gemeint sind. Erfindungsgemäß soll aber nur Bitumen (einschl. Asphalt) verwendet werden, während Teere und Peche ausdrücklich ausgenommen sind.

Bitumina haben generell eine sehr gute Wasser- und Wetterbeständigkeit. Aus diesem Grunde werden Produkte auf der Basis solcher Bitumina schon seit der Antike bis heute als wasser- und wetterbeständige Kitte, Anstriche, Straßenbeläge, Korrosionsschutzlacke, Beschichtungsmassen usw. eingesetzt.

Da nun Bitumen enthaltende Systeme in unmodifiziertem Zustand, insbesondere unter wechselnden klimatischen Bedingungen, in Sonderheit unter Hitze- und Kälteeinwirkung in Folge ihrer thermoplastischen Duktilität (Verformbarkeit) entweder erweichen (bei Hitze) oder verspröden (bei Kälte), war man schon immer bestrebt, solche Bitumen enthaltende Systeme zu modifizieren, um insbesondere die mit der Duktilität verbundenen Nachteile zu vermeiden.

Es wurden vielfältige Bitumen-Modifikationen in Erwägung gezogen, erprobt und teilweise auch angewandt, so z.B. Modifikationen von

1. Bitumen-Mineralöl,
2. Bitumen-Wachs,
3. Bitumen-Elastomer (z.B. NR, SBR, EPDM usw.) und
4. Bitumen-Polymer (z.B. PE, PP, Ethylencopolymere usw.).

Der Anteil der Modifikationskomponente lag dabei meistens deutlich unter dem Bitumenanteil, während der Polyurethananteil bei der erfindungsgemäßen Zusammensetzung praktisch gleich dem Bitumenanteil ist, d.h. das Gewichtsverhältnis von Polyurethan-Modifikationskomponente zu Bitumen liegt vorzugsweise bei 50:50.

Mit den erwähnten herkömmlichen Bitumen-Modifikationen konnte meistens eine gewisse Verbesserung der thermoplastischen Duktilität des Bitumenanteils erreicht werden, der überwiegend thermoplastische Charakter solcher modifizierten Bitumensysteme blieb aber weitgehend erhalten.

Bitumen-Polyurethan- oder Polyurethan-Bitumen-Modifikationen, insbesondere mit flüssigen Polyurethanpräpolymeren waren bisher nicht bekannt. Dies hat verschiedene Gründe. Einer dieser Gründe besteht in der bekannten Unverträglichkeit von Polyurethanpräpolymeren mit Bitumen, insbesondere in Lösungsmitteln, wobei das Auffinden geeigneter Lösungsmittelsysteme für Polyurethane und Bitumina besonders problematisch ist. Bitumen ist üblicherweise und bevorzugt in Benzinkohlenwasserstoffen wie Testbezin oder in aromatischen Mineralölen und ähnlichen löslich. Polyurethanpräpolymere, z.B. auf Basis von Polypropylenglykoldiol-diphenylmethan-4,4′-diisocyanat-Polyaddukten (kurz PPG-MDI-Präpolymere genannt), sind dagegen in solchen Benzinkohlenwasserstoffen und Mineralölen überhaupt nicht löslich. Andere mehr oder weniger polare Lösungsmittel wie Chlorkohlenwasserstoffe, Aromaten, Ester, Ketone usw., die eventuell als gemeinsame Lösungsmittel infrage kommen können, sind vielfach aus anwendungstechnischen Gründen (wegen der Lösungsmittelempfindlichkeit gegenüber expandierten Polystyrolschaumstoffen) oder aber aus arbeitshygienischen, also physiologischen Gründen nicht oder nicht mehr einsetzbar.

Aus den oben dargelegten Gründen war es bis jetzt nicht möglich (flüssige) Polyurethanprepolymere mit (festen) Bitumina in einkomponentiger, lösungsmittelfreier, lagerstabiler Form zu kombinieren (s. z.B. Encyclopedia of Polymer Science and Technology, New York-London-Sydney 1965, Bd. 2, Seite 423).

Zu den oben beschriebenen Unverträglichkeiten gesellt sich noch eine chemisch bedingte Unverträglichkeit, da sich wahrscheinlich phenolische oder andere reaktive Gruppen des Bitumens sehr schnell mit freien Isocyanatgruppen der Polyurethanprepolymeren umsetzen, was zu Aggregationen und damit zu Instabilitäten eines solchen Polyurethan-Bitumen-Systems führen muß.

Zwar sind zwei- oder einkomponentige Polyurethan-Steinkohlenteer-Kombinationen in Lösungsmitteln schon länger bekannt. Diesen Kombinationen kommt jedoch wegen des hochcancerogenen Charakters des Steinkohlenteers heute keine praktische Bedeutung mehr zu (s. z.B. GB-PS 1 323 884).

Der Erfindung liegt dementsprechend die Aufgabe zugrunde, eine Zusammensetzung auf Bitumenbasis zu schaffen, die zur oben erläuterten Verbesserung der Eigenschaften des Bitumen mit Polyurethan modifiziert ist, zur Vermeidung der obigen Nachteile und aus Umweltschutzgründen lösungsmittelfrei oder zumindest lösungsmittelarm ist und als lagerstabile Einkomponenten-Zusammensetzung vorliegt.

Zur Lösung dieser Aufgabe wird eine flüssige, lösungsmittelfreie oder lösungsmittelarme, härtbare Polyurethan-Bitumen-Weichmacher Einkomponenten-Zusammensetzung der im Patentanspruch 1 gekennzeichneten Art vorgeschlagen.

Gegenstand der Erfindung sind ferner ein Verfahren zur Herstellung der erfindungsgemäßen Zusammensetzung und die Verwendung der erfindungsgemäßen Zusammensetzung als Klebstoff, Dichtstoff und Beschichtungsmasse. Bevorzugte Ausführungsformen der Erfindung ergeben sich aus der nachfolgenden Beschreibung und den Unteransprüchen.

Erfindungsgemäß wurde überraschend gefunden, daß Polyurethanpräpolymere und Bitumen bei Einhaltung der in den Patentansprüchen angegebenen Gewichtsverhältnisse durch Anwendung einer ganz bestimmten Kombination von Primärweichmacher und Sekundärweichmacher zu einem flüssigen, lagerstabilen System verarbeitet werden können, das für verschiedenartige Anwendungen als Klebstoff, Dichtstoff, Schaumstoff oder Beschichtungsmasse geeignet ist. Dabei besteht ein großer Vorteil der erfindungsgemäßen Zusammensetzung in ihrem variablen Viskositätsverhalten. Ferner zeigen erfindungsgemäße Zusammensetzungen Haftung sowohl auf starren als auch auf flexiblen Materialien, wie sie beispielsweise bei Verklebungen im Dachbereich auftreten können, also für Dämmstoffverklebungen auf Basis expandierter Polystyrolschäume (kurz: EPS-Schäume), Polyurethan-Hartschäume, Mineralfasermatten mit Bitumen-Dachbahnen usw., und auf lackierten oder nicht lackierten Stahlblechen (sog. Trapezblechen). Weiterhin eignen sich erfindungsgemäße Zusammensetzungen für die Verklebung, Abdichtung oder Beschichtung von Betonuntergründen, Faserzementplatten (früher Asbestzementplatten)usw..

Die erfindungsgemäßen lösungsmittelfreien oder lösungsmittelarmen Polyurethan-Bitumen-Weichmacherzusammensetzungen stellen darüber hinaus echte "Kaltbitumen-Systeme" dar und bieten damit eine

Alternative zu den herkömmlichen "Heißbitumen-Systemen".

Als hervorragender Primär-Weichmacher hat sich Butylurethan-Formaldehyd-Carbamidsäureesterharz (kurz: BUFC-Harz) erwiesen, der darüber hinaus gleichzeitig auch noch zur Flexibilisierung von Destillat-Bitumen geeignet ist. Dieser Primär-Weichmacher (BUFC-Harz), der eine ölige oder weichharzige Konsistenz besitzt und mit Diol-Diisocyanat-Präpolymeren wie z.B. Polypropylenglykoldiol-diphenylmethan-4,4'-diisocyanat-Polyaddukten (kurz: PPG-MDI-Präpolymere) sehr gut verträglich ist, ist mit dem Bitumen üblicherweise nur bedingt, d.h. in gewissen Grenzen verträglich.

Um nun diese bedingte Verträglichkeit für Bitumen in eine unbedingte Verträglichkeit umwandeln zu können, war die Auffindung eines sehr guten Sekundär-Weichmachers für Bitumen notwendig, der aber gleichzeitig eine sehr gute Verträglichkeit mit dem Polyurethan-Präpolymeren besitzen mußte. Als besonders geeignet hat sich 1-Methyl-2,3-dibenzylbenzol( = 2,3-Dibenzyltoluol) entsprechend der folgenden Formel

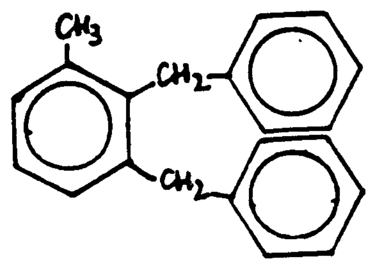

erwiesen.

Das erfindungsgemäß als Primär-Weichmacher verwendete Butylurethan-Formaldehyd-Carbamidsäureesterharz ist ein im Handel erhältliches Polykondensationsprodukt von Carbamidsäurebutylester mit Formaldehyd, welches folgende sich wiederholende Segmente aufweist:

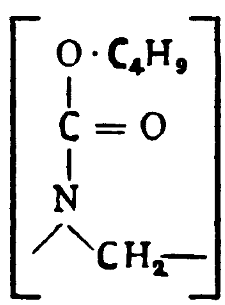

Die erfindungsgemäßen Zusammensetzungen, die niedrig-, mittel- oder hochviskos eingestellt werden können, sind feuchtigkeitshärtend und können beispielsweise bei Raumtemperatur (ungefähr 20 ° C) und einer relativen Luftfeuchtigkeit von z.B. 50% ausgehärtet werden. Alternativ kann bei Ofentemperatur (z.B. 60 minütige Härtung bei ungefähr 80 ° C) oder bei noch höheren Temperaturen (z.B. 30 minütige Härtung bei ungefähr 180 ° C) gehärtet werden. Die erfindungsgemäßen Zusammensetzungen stellen also vollständig flüssige Polyurethan-Bitumen-Systeme dar, die ohne oder mit herkömmlichen Härtungsmittelzusätzen mehrfunktionell entweder bei Raumtemperatur durch Luftfeuchtigkeitshärtung aushärten, die aber auch bei z.B. 80 ° C im Ofen gehärtet oder bei z.B. 180 ° C eingebrannt werden können, ohne daß der Bitumenanteil ausschmilzt oder abläuft.

Hinsichtlich der erfindungsgemäß geeigneten Bitumina sei auf die einleitenden Erläuterungen verwiesen. Bevorzugt werden erfindungsgemäß Destillat- oder geblasene Bitumina verwendet, die eine einwandfreie Verträglichkeit mit 2,3-Dibenzyltoluol aufweisen.

Als Polyurethanpräpolymer eignen sich die für Präpolymer-Anwendungen bekannten Polyether- und/oder Polyesterurethanpräpolymeren. Vorzugsweise werden Diol-Diisocyanat-Präpolymere und insbesondere Polyetherdiol-Diisocyanat-Präpolymere eingesetzt, die durch Reaktion von überschüssigem Diisocyanat mit Polyethern hergestellt werden. Besonders bevorzugt ist Polypropylenglykoldiol-diphenylmethan-4,4'-Diisocyanat-Präpolymer (PPG-MDI-Präpolymer). Die bevorzugten Polyetherdiol-diisocyanate werden aus Polyetherdiolen wie Polypropylenglykoldiol mit einem Molekulargewicht zwischen 1000 und 3000 und

vorzugsweise um 2000 und insbesondere Diphenylmethan-4,4'-diisocyanat hergestellt. Sie besitzen einen NCO-Wert zwischen 6 und 13% und eine Ausgangsviskosität von etwa 10000 mPa.s und zeigen eine einwandfreie Verträglichkeit mit BUFC-Harz. Für die erfindungsgemäßen Zwecke geeignete Polyesterurethanpräpolymere sind beispielsweise Dicarbonsäureester-Diol-Diisocyanat-Präpolymere. Insbesondere sind hier Adipinsäureester-Diol-Diphenylmethan-4,4'-Diisocyanat-Präpolymere zu nennen.

Beispiel 1

| | | |
|---|---|---|
| a) | PPG-MDI-Präpolymere (NCO-Geh.: 6-13% Visc. 10000 m.Pa.s) | 25.00 Gew.-Tl. |
| b) | Destillat- oder geblasenes Bitumen (Penetration/25 °C/1/10 mm 10-210) | 25.00 Gew.-Tl. |
| c) | BUFC-Weichharz | 25.00 Gew.-Tl. |
| d) | 2,3-Dibenzyltoluol | 22.00 Gew.-Tl. |
| e) | Poly-MDI (NCO-Geh.: 31.0%) | 3.00 Gew.-Tl. |
| | | 100.00 Gew.-Tl. |

Verhältnis: Bindemittel: Weichmacher = 50:50
Verhältnis: Polyurethan: Bitumen = 50:50
Viscosität gemessen bei 20 °C mit einem Brookfield-Viskosimeter RVT mit Spindel 6: m.Pa.s. 10000 bis 20000
Anwendung: Als Primer, Vorstrich etc.

Beispiel 2

| | | |
|---|---|---|
| a) | PPG-MDI-Präpolymere | 30.00 Gew.-Tl. |
| b) | Destillat- oder geblasenes Bitumen | 30.00 Gew.-Tl. |
| c) | BUFC-Weichharz | 20.00 Gew.-Tl. |
| d) | 2,3-Dibenzyltoluol | 17.00 Gew.-Tl. |
| e) | Poly-MDI | 3.00 Gew.-Tl. |
| | | 100.00 Gew.-Tl. |

Verhältnis: Bindemittel: Weichmacher = 60:40
Verhältnis: Polyurethan: Bitumen = 50:50
Viscosität gemessen bei 20 °C mit einem Brookfield-Viskosimeter RVT mit Spindel 6: m.Pa.s. 20000 bis 30000
Anwendung: Als Beschichtungsmasse

Beispiel 3

| | | |
|---|---|---|
| a) | PPG-MDI-Präpolymere | 35.00 Gew.-Tl. |
| b) | Destillat- oder geblasenes Bitumen | 35.00 Gew.-Tl. |
| c) | BUFC-Weichharz | 15.00 Gew.-Tl. |
| d) | 2,3-Dibenzyltoluol | 12.00 Gew.-Tl. |
| e) | Poly-MDI | 3.00 Gew.-Tl. |
| | | 100.00 Gew.-Tl. |

Verhältnis: Bindemittel: Weichmacher = 70:30
Verhältnis: Polyurethan: Bitumen = 50:50
Viscosität gemessen bei 20°C mit einem Brookfield-Viskosimeter RVT mit Spindel 6: m.Pa.s. 40000 bis 50000
Anwendung: Als Klebstoff

Beispiel 4

| | | |
|---|---|---|
| a) | PPG-MDI-Präpolymere | 40.00 Gew.-Tl. |
| b) | Destillat- oder geblasenes Bitumen | 40.00 Gew.-Tl. |
| c) | BUFC-Weichharz | 10.00 Gew.-Tl. |
| d) | 2,3-Dibenzyltoluol | 7.00 Gew.-Tl. |
| e) | Poly-MDI | 3.00 Gew.-Tl. |
| | | 100.00 Gew.-Tl. |

Verhältnis: Bindemittel: Weichmacher = 80:20
Verhältnis: Polyurethan: Bitumen = 50:50
Viscosität gemessen bei 20°C mit einem Brookfield-Viskosimeter RVT mit Spindel 6: m.Pa.s. 70000 bis 90000
Anwendung: Als Klebstoff

Die Herstellung der erfindungsgemäßen Zusammensetzungen erfolgt vorzugsweise in der Weise, daß man zunächst das Polyurethanpräpolymer mit dem BUFC-Harz mischt. Separat davon stellt man eine Lösung von Bitumen in 2,3-Dibenzyltoluol her. Diese setzt man bei Raumtemperatur mit einer kleinen Menge eines Stabilisators um, um etwaige phenolische oder andere reaktive Gruppen des Bitumens oder Feuchtigkeitsreste, die die Lagerstabilität des Systems beeinträchtigen könnten, zu neutralisieren. Geeignete Stabilisatoren sind beispielsweise Säurechloride wie Benzoylchlorid. In einer bevorzugten Ausführungsform der Erfindung verwendet man als Stabilisator eine kleine Menge (etwa 1 bis 5%, vorzugsweise etwa 3%) Diphenylmethan-4,4'-Diisocyanat, wobei im Handel erhältliche Produkte mit oligomeren oder polymeren Anteilen (Poly-MDI) mit einem NCO-Gehalt zwischen 30 und 32% verwendet werden können. Nach etwa 30 Min. Reaktionszeit wird dann die Lösung von Bitumen in 2,3-Dibenzyltoluol mit der Mischung aus Polyurethanpräpolymer und BUFC-Harz gemischt. Die Vermischung der Komponenten erfolgt in herkömmlicher Weise vorzugsweise bei Raumtemperatur. So können übliche Rührgefäße mit Rührern eingesetzt werden. Um den erforderlichen Feuchtigkeitsausschluß sicherzustellen, kann unter einer Inertgasatmosphäre oder unter Vakuum gearbeitet werden. Hierfür geeignete Mischvorrichtungen gehören ebenfalls zum Stand der Technik.

Das Gewichtsverhältnis von Polyurethanpräpolymer zu Bitumen liegt im Bereich von 70:30 bis 30:70. Vorzugsweise beträgt dieses Verhältnis etwa 50:50 (55:45 bis 45:55). Das Verhältnis von Polyurethanprepolymer + Bitumen (Bindemittel) zu BUFC-Harz + 2,3-Dibenzyltoluol (Weichmacher) liegt im Bereich von 40:60 bis 90:10 und vorzugsweise im Bereich von 50:50 bis 80:20. Das Gewichtsverhältnis von Polyurethanpräpolymer zu BUFC-Harz liegt im Bereich von 40:60 bis 85:15 und vorzugsweise im Bereich von 50:50 bis 80:20. Schließlich liegt das Gewichtsverhältnis von Bitumen zu 2,3-Dibenzyltoluol im Bereich von 40:60 bis 90:10 und vorzugsweise im Bereich von 50:50 bis 85:15.

Die Viskosität und Flexibilität der erfindungsgemäßen Zusammensetzungen läßt sich je nach Anwendungserfordernis durch Variation des Verhältnisses Bindemittel zu Weichmacher einstellen. Dabei kann es erforderlich sein, die auf diese Weise erhaltenen Zusammensetzungen in an sich bekannter Weise mit anorganischen oder organischen Fasern oder anderen geeigneten Füllstoffen oder mit zusätzlichen Haftvermittlern, Trocknungsmitteln, Antikorrosions-Schutzmitteln usw. zu versetzen, um bestimmte erwünschte Eigenschaften wie Standfestigkeit, Klebfreiheit, Haftung, Korrosionsschutz, Thixotropie oder ähnliche zu erreichen. Werden bestimmte Abbindeeffekte oder bestimmte Viskositätseinstellungen angestrebt, so können den lösungsmittelfreien erfindungsgemäßen Zusammensetzungen kleinere Mengen (bis zu 10 Gew.%, z.B. 5 bis 10 Gew.%) eines geeigneten Lösungsmittels, z.B. Methylenchlorid oder ähnliche, zugesetzt werden.

In der Praxis hat sich gezeigt, daß die Modifizierung der Eigenschaften der erfindungsgemäßen Zusammensetzungen sich besonders einfach dadurch erreichen läßt, daß man beispielsweise den Zusammensetzungen gemäß den Beispielen 1 bis 4 eine Additivpaste zusetzt, bei der es sich um ein Füllstoff-Pigment-Weichmacher-Haftvermittler-Trockner-Gemisch handelt und mit der man die einzelnen chemischen und/oder physikalischen Eigenschaften der erfindungsgemäßen Zusammensetzungen entsprechend beeinflussen kann. Auf diese Weise kann man die Haftung, die Kälteflexibilität, die Viskosität und Rheologie und damit die Auftragsmethode (Streichen, Spritzen, Gießen), die Schichtstärke usw. beeinflussen bzw. modifizieren.

Geeignete Additivpasten entsprechend den obigen Ausführungen können etwa folgende Zusammensetzungen aufweisen:

| | | | a. | b. |
|---|---|---|---|---|
| 1. | Füllstoffe, z.B. Calciumcarbonate | | 60.5 | 62,5% |
| 2. | Pigmente, z.B. Carbon Black | | 2.5 | 2,5% |
| 3. | Weichmacher: | | | |
| | 3.1.: BUFC-Weichharz | | 25.0 | 20.0% |
| | 3.2.: 2,3-Dibenzyltoluol | | 5.0 | 10.0% |
| 4. | Haftvermittler: | Ketonharze,<br>Cumaron-Inden-Harze | 2.5<br>2.5 | 1,5%<br>1.5% |
| 5. | Trockner, z.B. Molekularsieb 3 Å | | 2.0 | 2.0% |
| | | | 100.0 | 100.0% |

Die obigen Additivpasten a) oder b) kann man in dieser oder einer ähnlichen Zusammensetzung mit den Bindemitteln, wie sie beispielsweise in den Beispielen 1 bis 4 angegeben sind, in nahezu beliebigen Verhältnissen variieren, vorzugsweise in einem Mischungsverhältnis von Bindemittel zu Additivpaste von 80:20 bis 20:80.

Ferner ist es grundsätzlich möglich, die erfindungsgemäßen Zusammensetzungen durch Zusatz von 5 bis 15 Gew.% (bezogen auf 100 Gew.% der erfindungsgemäßen Zusammensetzungen) eines hochreaktiven, flüssigen Verschäumungsmittels zu einem offenzelligen Schaum mit geschlossener Außenhaut zu verarbeiten. Als Verschäumungsmittel eignen sich insbesondere Gemische aus Polypropylenglykol, Tensid, Triethylendiamin und ggf. Wasser. Zwei typische Zusammensetzungen für geeignete Verschäumungsmittel sind im folgenden angegeben:

| | | |
|---|---|---|
| Polypropylenglykol (NCO-Fänger) | 25% | 33% |
| Tensid (Schaumlamellenbildner) | 25% | 33% |
| Triethylendiamin (Schockhärtung) | 25% | 34% |
| Wasser | 25% | - |
| | 100 | 100 |

Das Verschäumungsmittel wird mit Hilfe eines hochtourigen Mischaggregats sehr schnell untergemischt (Mischdauer weniger als 30 sec.). Der Schaum treibt dann innerhalb von 30 sec. bis 2 Min. auf und härtet in dieser Zeit oberflächlich aus. Das Aufschäumvolumen liegt bei etwa 400 Vol.%, ohne daß irgendwelche zusätzlichen Treibgase wie Fluorchlorkohlenwasserstoffe oder ähnliche eingesetzt werden müssen. Die Raumgewichte liegen bei 250 bis 260 kg/m$^3$ und können durch den Einsatz von Treibgasen mindestens um eine ganze Zehnerpotenz, also auf etwa 20 bis 30 kg/m$^3$ gesenkt werden. Der Verlustfaktor (tan $\delta$) liegt bei ungefähr 0,5, was als sehr guter akustischer Wert angesehen wird. Der Elastizitätsmodul bei 20 °C liegt zwischen $1 \times 10^6$ bis $8 \times 10^5$ Pa.

Die aufgeschäumten erfindungsgemäßen Zusammensetzungen sind sehr gute Materialien für die Körperschalldämpfung. Diese Eigenschaften des aufgeschäumten Materials lassen sich universell nutzen, z.B. im Karosseriebau/Türen, bei den Trapez-Dachblechen usw. Die Kälte-/Wärme-Beständigkeit eines solchen aufgeschäumten erfindungsgemäßen Materials liegt bei -40 °C/+200 °C, also in einem sehr breiten Temperaturbereich, der mit herkömmlichen Bitumenmaterialien niemals erreichbar wäre.

Bei der Aushärtung der erfindungsgemäßen Zusammensetzungen unter dem Einfluß von Feuchtigkeit findet in Abhängigkeit vom Feuchtigkeitsgrad (z.B. der relativen Luftfeuchtigkeit) ein mehr oder weniger starkes Aufschäumen statt. Um Unregelmäßigkeiten bei der Aufschäumung zu vermeiden und damit ein gleichmäßigeres Schaumprodukt zu erzielen, empfiehlt sich der Zusatz eines Tensids, vorzugsweise eines nicht ionogenen Tensids, in einer Menge zwischen 0,1 bis 2 Gew.%, um bei dem anschließenden Härtungsprozeß ein schwaches bis mäßiges Aufschäumen (bis etwa um 100 Vol.%) zu erreichen. Diese Maßnahme hat sich insbesondere bei der Verwendung der erfindungsgemäßen Zusammensetzungen als Klebstoffe im Dachbereich bewährt.

Überraschenderweise wurde ferner festgestellt, daß die erfindungsgemäßen Zusammensetzungen mit Mengen von 0,1 bis max. 15 Gew.% Leinöl sehr gut verträglich sind. Dabei kann der Leinölzusatz sogar das 2,3-Dibenzyltoluol partiell ersetzen, was zu einer Einsparung bei diesem Weichmacher führt. Im Handel erhältliches Leinöl, das meistens bereits Sikkative enthält, ist gut geeignet (z.B.: Leinöl-Firnis) Der Vorteil solcher limitierten Leinölzusätze liegt in der Haftungsverbesserung der erfindungsgemäßen Zusammensetzungen bei Anwendung auf expandierten PS-Schäumen oder Metallblechen.

Ganz allgemein können in den erfindungsgemäßen Zusammensetzungen die üblichen Zusätze wie Lösungsmittel, Haftvermittler, Korrosionsschutzmittel, Trocknungsmittel, organische und/oder anorganische Fasern und/oder Füllstoffe in stark variierenden Mengen eingesetzt werden. Bevorzugt sind Gewichtsverhältnisse von Bindemittel zu Zusätzen im Bereich von 90:10 bis 20:80. Allerdings handelt es sich bei der Einverleibung von Zusätzen in die erfindungsgemäßen Zusammensetzungen nur um eine Gegebenenfalls-Maßnahme, d.h. es kann auch auf Zusätze völlig verzichtet werden.

Die bevorzugten technischen Anwendungsgebiete für die erfindungsgemäßen Zusammensetzungen sind die folgenden:

(1) als Klebstoff für die Verklebungen von Dämmstoffen wie Bitumenbahnen, Polystyrol-Schaumstoffen, Polyurethan-Hartschaumstoffen, Mineralfasermatten usw. auf Bauwerkstoffen wie Beton, Faserzementplatten, Holzspanplatten, lackierten oder nicht lackierten Stahlblechen (Trapezblechen) usw.;

(2) als Dichtstoffe mit fugenfüllenden Eigenschaften, sofern Luftfeuchtigkeit zwecks Härtung Zutritt hat;

(3) als Beschichtungsmassen zur flächendeckenden Beschichtung von lackierten Stahlblechen, so z.B. als Unterbodenschutz oder Hohlraumversiegelung im Automobilbau.

Auch bei eventuellem Zusatz kleiner Lösungsmittelmengen (5 bis 10 Gew.%) erhält man hochkonzentrierte (sog. "high solid") Polyurethan-Bitumen-Systeme.

## Patentansprüche

**1.** Flüssige, lösungsmittelfreie oder lösungsmittelarme, härtbare, Polyurethan-Bitumen-Weichmacher-Einkomponenten-Zusammensetzung, gekennzeichnet durch

a) ein Polyether- und/oder Polyesterurethan-Präpolymer

b) Bitumen,

c) öliges oder weichharzartiges Butylurethan-Formaldehyd-Carbamidsäureesterharz,

d) 2,3-Dibenzyltoluol,

e) Stabilisator und

f) gegebenenfalls übliche Zusätze wie Lösungsmittel in einer Menge von bis zu 10 Gew.%, Haftvermittler, Tenside, Korrosionsschutzmittel, Trocknungsmittel, organische und/oder anorganische Fasern und/oder Füllstoffe,

wobei das Gewichtsverhältnis von a) zu b) im Bereich von 70:30 bis 30:70 und vorzugsweise bei 50:50, das Gewichtsverhältnis von a) + b) zu c) + d) im Bereich von 40:60 bis 90:10 und vorzugsweise 50:50 bis 80:20, das Gewichtsverhältnis von a) zu c) im Bereich von 40:60 bis 85:15 und vorzugsweise 50:50 bis 80:20 und das Gewichtsverhältnis von b) zu d) im Bereich von 40:60 bis 90:10 und vorzugsweise 50:50 bis 85:15 liegt.

**2.** Zusammensetzung nach Anspruch 1, dadurch gekennzeichnet, daß sie als Stabilisator e) freies Diisocyanat, vorzugsweise Diphenylmethan-4,4'-diisocyanat enthält.

**3.** Zusammensetzung nach Anspruch 1 oder 2, dadurch gekennzeichnet, daß das Polyurethanpräpolymer ein Diol-Diisocyanat-Präpolymer, insbesondere ein Polyether-diol-diisocyanat-präpolymer ist.

**4.** Zusammensetzung nach Anspruch 3, dadurch gekennzeichnet, daß das Polyurethanpräpolymer ein Polypropylenglykol-diol-diphenylmethan-4,4'-diisocyanat-präpolymer ist.

**5.** Zusammensetzung nach einem der Ansprüche 1 bis 4, dadurch gekennzeichnet, daß das Bitumen Destillat-Bitumen oder geblasenes Bitumen ist.

**6.** Zusammensetzung nach einem der Ansprüche 1 bis 5, dadurch gekennzeichnet, daß sie zusätzlich 0,1 bis 15 Gew.-% Leinöl enthält, wobei das Leinöl gegebenenfalls einen Teil des 2,3-Dibenzyltoluols ersetzt.

**7.** Verfahren zur Herstellung von flüssigen, lösungsmittelfreien oder lösungsmittelarmen, härtbaren Polyurethan-Bitumen-Weichmacher-Einkomponenten-Zusammensetzungen gemäß den Ansprüchen 1 bis 6, dadurch gekennzeichnet, daß man

a) ein Polyether- und/oder Polyesterurethanpräpolymer mit einem öligen oder weichharzartigen Butylurethan-Formaldehyd-Carbamidsäureesterharz versetzt,

b) eine Lösung von Bitumen in 2,3-Dibenzyltoluol herstellt und diese Lösung bei Raumtemperatur mit einer kleinen Menge eines Stabilisators umsetzt und

c) die in Stufe a) hergestellte Mischung und die in Stufe b) hergestellte Lösung miteinander mischt.

**8.** Verfahren nach Anspruch 7, dadurch gekennzeichnet, daß man als Stabilisator ein Diisocyanat und insbesondere Diphenylmethan-4,4'-diisocyanat verwendet.

**9.** Verwendung der Zusammensetzungen gemäß den Ansprüchen 1 bis 6 oder hergestellt nach dem Verfahren gemäß Anspruch 7 oder 8 als Klebstoff, Dichtstoff, Schaumstoff oder Beschichtungsmasse.

**10.** Verwendung nach Anspruch 9, dadurch gekennzeichnet, daß man den Zusammensetzungen kurz vor der Verarbeitung ein Verschäumungsmittel in einer Menge von 5 bis 15 Gew.% (bezogen auf 100 Gew.% der Zusammensetzungen), insbesondere eine Mischung aus Polypropylenglykol, Tensid, Triethylendiamin und ggf. Wasser zusetzt.

## Claims

**1.** A liquid solvent-free or low-solvent hardenable polyurethane-bitumen-softener single-component composition, characterised by

a) a polyether and/or polyester urethane prepolymer

b) bitumen,

c) oily or soft resin-like butyl urethane formaldehyde-carbamide acid ester resin,

d) 2,3-dibenzyl toluene,

e) stabiliser, and

f) possibly conventional additives such as solvents in a quantity of up to 10 per cent by weight, coupling agents, surfactants, corrosion preventives, drying agents, organic and/or inorganic fibres and/or fillers,

the ratio by weight of a) to b) being in the range from 70:30 to 30:70 and preferably 50:50, the ratio by weight of a) + b) to c) + d) being in the range from 40:60 to 90:10 and preferably 50:50 to 80:20, the ratio by weight of a) to c) being in the range from 40:60 to 85:15 and preferably 50:50 to 80:20 and the ratio by weight of b) to d) being in the range from 40:40 to 90:10 and preferably 50:50 to 85:15.

**2.** A composition according to claim 1, characterised in that as a stabiliser it contains free diisocyanate, preferably diphenyl methane-4,4'-diisocyanate.

**3.** A composition according to claim 1 or 2, characterised in that the polyurethane prepolymer is a diol-diisocyanate-prepolymer, particularly a polyether-diol-diisocyanate prepolymer.

**4.** A composition according to claim 3, characterised in that the polyurethane prepolymer is a polypropylene glycol-diol-diphenyl methane-4,4'-diisocyanate-prepolymer.

**5.** A composition according to one of claims 1 to 4, characterised in that the bitumen is distillate-bitumen or blown bitumen.

**6.** A composition according to one of claims 1 to 5, characterised in that it additionally contains 0.1 to 15 per cent by weight linseed oil, the linseed oil possibly replacing a part of the 2.3-dibenzyl-toluene.

**7.** A method of producing liquid solvent-free or low-solvent hardenable polyurethane-bitumen-softener single-component compositions according to claims 1 to 6, characterised in that

a) a polyether and/or polyester urethane prepolymer is mixed with an oily or soft resin-like butyl-urethane-formaldehyde-carbamide acid ester resin,

b) a solution of bitumen in 2,3-dibenzyl toluene is produced and this solution is reacted with a small quantity of a stabiliser at room temperature, and

c) the mixture produced in stage a) and the solution produced in stage b) are mixed together.

**8.** A method according to claim 7, characterised in that a diisocyanate and in particular diphenyl methane-4,4'-diisocyanate is used as a stabiliser.

**9.** Use of the compositions according to claims 1 to 6 or produced by the method according to claims 7 or 8 as an adhesive, a sealing substance, foam or coating composition.

**10.** Use according to claim 9, characterised in that shortly prior to processing, a foaming agent in a quantity of 5 to 15 per cent by weight (related to 100 per cent by weight of the compositions), particularly a mixture of polypropylene glycol, surfactant, triethylene diamine and possibly water is added to the compositions.

## Revendications

**1.** Composition liquide, durcissable de polyuréthane-bitume-plastifiant constituée d'un composant, exempte ou pauvre en solvants, caractérisée par la présence de

a) un prépolymère de poyéther et/ou de polyesteruréthane

b) bitumes,

c) une résine huileuse ou molle d'ester de butyluréthane formaldéhyde et d'acide carbamique

d) 2,3-dibenzyltoluène

e) un stabilisateur et

f) le cas échéant des additifs courants tels que des solvants en quantité allant jusqu'à 10 % en poids, agents de prise, agents tensio-actifs, protecteurs contre la corrosion, agents dessicants , fibres organiques et/ou inorganiques et/ou charges de remplissage,

composition dans laquelle le rapport pondéral de a) à b) se situe dans le domaine de 70:30 jusqu'à 30:70, et de préférence à 50:50, le rapport pondéral de a) + b) à c) + d) se situe dans le domaine de

40:60 jusqu'à 90:10 et de préférence de 50:50 jusqu'à 80:20, le rapport pondéral de a) à c) se situe dans le domaine de 40:60 jusqu'à 05:15 et de préférence de 50:50 jusqu'à 80:20 et le rapport pondéral de b) à d) est dans le domaine de 40:60 jusqu'à 90:10 et de préférence de 50:50 jusqu'à 85:15.

**2.** Composition suivant la revendication 1, caractérisée en ce qu'elle contient comme stabilisateur e) un diisocyanate libre, de préférence le diphénylméthane-4,4'-diisocyanate.

**3.** Composition suivant la revendication 1 ou 2, caractérisée en ce que le prépolymère de polyuréthane est un prépolymère de diisocyanate-diol, en particulier un prépolymère de polyéther de diisocyanate-diol.

**4.** Composition suivant la revendication 3, caractérisée en ce que le prépolymère de polyuréthane est un prépolymère de polypropylèneglycol-diol-diphénylméthane-4,4'-diisocyanate.

**5.** Composition suivant l'une quelconque des revendications de 1 à 4, caractérisée en ce que le bitume est du distillat de bitume ou du bitume soufflé.

**6.** Composition suivant l'une quelconque des revendications de 1 à 5, caractérisée en ce qu'elle contient en supplément de 0,1 à 15 % en poids d'huile de lin, cette huile de lin remplaçant le cas échéant une partie du 2,3-dibenzyltoluène.

**7.** Procédé de préparation de compositions liquides, durcissables de polyuréthane-bitume-plastifiant constituées d'un composant, exemptes ou pauvres en solvants, suivant les revendications de 1 à 6, caractérisé en ce que

a) on met en présence un prépolymère de polyéther et/ou de polyesteruréthane et une résine huileuse ou molle d'ester de butyluréthane formaldéhyde et d'acide carbamique,

b) on prépare une solution de bitume dans du 2,3-dibenzyltoluène et on fait réagir cette solution, à température ambiante, avec de petites quantités d'un stabilisateur et,

c) on mélange l'un avec l'autre le mélange préparé à l'étape a) et la solution préparée à l'étape b).

**8.** Procédé suivant la revendication 7, caractérisé en ce qu' on utilise comme stabilisateur un diisocyanate et en particulier le diphénylméthane-4,4'-diisocyanate.

**9.** Utilisation des compositions suivant les revendications 1 à 6 ou préparées suivant le procédé conformément aux revendications 7 ou 8 comme produit adhésif, produit d'étanchéité, produit de moussage ou produit de revêtement.

**10.** Utilisation suivant la revendiation 9, caractérisée en se qu'on ajoute aux compositions, peu avant leur mise en oeuvre, un agent moussant en quantité de 5 à 15% en poids (rapportée à 100% en poids des compositions), en particulier un mélange de polypropylèneglycol, d'agent tensio-actif, de triéthylènediamine et le cas échéant de l'eau.